(19) Europäisches Patentamt
European Patent Office
Office européen des brevets

(11) EP 1 240 216 B1

(12) EUROPÄISCHE PATENTSCHRIFT

(45) Veröffentlichungstag und Bekanntmachung des Hinweises auf die Patenterteilung:
**07.04.2004 Patentblatt 2004/15**

(21) Anmeldenummer: **00974382.4**

(22) Anmeldetag: **10.10.2000**

(51) Int Cl.[7]: **C08F 110/10**, C08F 2/00, C08F 4/14

(86) Internationale Anmeldenummer:
**PCT/EP2000/009972**

(87) Internationale Veröffentlichungsnummer:
**WO 2001/027172 (19.04.2001 Gazette 2001/16)**

# (54) VERFAHREN ZUR KONTINUIERLICHEN HERSTELLUNG VON POLYISOBUTEN

METHOD FOR CONTINUOUS PRODUCTION OF POLYISOBUTENE

PROCEDE DE PREPARATION EN CONTINU DE POLYISOBUTENE

(84) Benannte Vertragsstaaten:
**AT BE CH CY DE DK ES FI FR GB GR IE IT LI LU MC NL PT SE**

(30) Priorität: **11.10.1999 DE 19948947**

(43) Veröffentlichungstag der Anmeldung:
**18.09.2002 Patentblatt 2002/38**

(73) Patentinhaber: **BASF AKTIENGESELLSCHAFT**
**67056 Ludwigshafen (DE)**

(72) Erfinder: **RATH, Hans, Peter**
**67269 Grünstadt (DE)**

(74) Vertreter: **Kinzebach, Werner, Dr. et al**
**Ludwigsplatz 4**
**67059 Ludwigshafen (DE)**

(56) Entgegenhaltungen:
**EP-A- 0 807 641**
**EP-A- 0 870 783**
**WO-A-96/40808**
**US-A- 5 286 823**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 240 216 B1

## Beschreibung

Die vorliegende Erfindung betrifft ein Verfahren zur kontinuierlichen Herstellung von Polyisobuten mit einem zahlenmittleren Molekulargewicht im Bereich von 500 bis 50 000 und einem Gehalt endständiger Doppelbindungen von wenigstens 50 mol% durch einoder mehrstufige, kontinuierliche Polymerisation von Isobuten in flüssiger Phase in Gegenwart eines Katalysators aus Bortrifluorid und wenigstens einer sauerstoffhaltigen Verbindung bei Temperaturen unterhalb +40°C.

Polyisobutene werden üblicherweise durch kationische Polymerisation von Isobuten in flüssiger Phase oder in der Gasphase in Gegenwart von Polymerisationskatalysatoren, wie Aluminiumtrichlorid oder Aluminiumalkylchloriden hergestellt. So hergestellte Polyisobutene weisen in der Regel nur einen geringen Gehalt (unterhalb 10 mol%) an endständigen Doppelbindungen und eine vergleichsweise breite Molekulargewichtsverteilung, charakterisiert durch eine Dispersizität oberhalb 2, auf. Unter der Dispersizität versteht man den Quotienten aus gewichtsmittlerem Molekulargewicht $\overline{M}_W$ geteilt durch das zahlenmittlere Molekulargewicht $\overline{M}_N$.

Für eine Reihe von Anwendungen sind Polyisobutene mit zahlenmittleren Molekulargewichten $\overline{M}_N$ im Bereich von 500 bis 50 000 Dalton und einem hohen Gehalt, d.h. mindestens 50 mol%, an endständigen Doppelbindungen von Interesse. Derartige Polyisobutene werden als hochreaktive Polyisobutene bezeichnet. Ihre Herstellung erfolgt in der Regel durch Polymerisation von Isobuten oder isobutenhaltigen Kohlenwasserstoffen mit $BF_3$-Komplexen als Katalysatoren. Sie finden Verwendung als Zwischenprodukte für die Herstellung von Additiven für Schmier- und Kraftstoffe. Das molekulare Bauprinzip dieser Additive beruht auf der Verknüpfung polarer Strukturen mit dem unpolaren, oleophilen Polyisobutenylrest. Die Verknüpfung der polaren Struktur mit dem unpolaren, oleophilen Rest erfolgt durch Funktionalisierung der terminalen Doppelbindung im Polyisobuten, wobei man zunächst eine reaktive Funktionalität, beispielsweise durch Hydroformylierung, durch Epoxidierung, durch Umsetzung mit Phenolen oder Umsetzung mit Maleinsäureanhydrid in das Polyisobuten einführt, die anschließend in einer Folgereaktion, beispielsweise durch Umsetzung mit Ammoniak, Aminen, Aminoalkoholen, Halbaminalen oder Polyalkylenoxiden, gegebenenfalls unter reduzierenden Bedingungen, modifiziert werden.

Kraft- und Schmierstoffadditive auf Basis von Polyisobutenen sind beispielsweise aus der DE-A 2702604, EP-A 244616, EP-A 277345, EP-A 476485, EP-A 539821, EP-A 568873, WO-92/12221, WO-92/14806, WO-94/24231, DE-A 3611230 und DE-A 19645430 bekannt. Da bei den vorgenannten Funktionalisierungsreaktionen bevorzugt die endständigen Doppelbindungen (Vinyliden-Doppelbindungen) und nur in untergeordnetem Maße die weiter im Inneren der Polymerkette liegenden Doppelbindungen reagieren, ist der Gehalt an endständigen Doppelbindungen im Polyisobuten ein wesentliches Qualitätskriterium. Über die Bildung endständiger Doppelbindungen bei der kationischen Polymerisation von Isobuten sei auf das von Puskas et al., J. Polym. Sci., Symp.56, (1996) S.191 vorgeschlagene Formelschema verwiesen (siehe auch WO-96/40808 S.3).

Ein weiteres, wichtiges Qualitätskriterium für reaktive Polyisobutene ist die Breite ihrer Molekulargewichtsverteilung, charakterisiert durch die Dispersizität $\overline{M}_W/\overline{M}_N$. Dabei werden Dispersizitäten $\overline{M}_W/\overline{M}_N$ unterhalb 1,8 angestrebt.

Aus der DE-A 2702604 ist ein Verfahren zur Herstellung reaktiver Polyisobutene bekannt, bei dem Isobuten in Gegenwart von Bortrifluorid bei Temperaturen im Bereich von -50°C bis +30°C polymerisiert wird. Hierbei werden Polyisobutene mit bis zu 88 mol% endständigen Doppelbindungen erhalten. Polyisobutene mit einer Dispersizität < 1,8 werden nach diesem Verfahren nicht erhalten.

Die EP-A 145235 lehrt die Herstellung reaktiver Polyisobutene mit einem Gehalt endständiger Doppelbindungen von wenigstens 70 mol%. Dieses Ziel wird erreicht, indem man Isobuten in Gegenwart eines vorgebildeten Komplexes aus Bortrifluorid und einem primären Alkohol bei Temperaturen von -100°C bis +50°C bei einer Kontaktzeit von mehr als 8 min polymerisiert. Zwar werden nach diesem Verfahren auch Polyisobutene mit vergleichsweise enger Molekulargewichtsverteilung erhalten. Das Ziel einer engen Molekulargewichtsverteilung bei gleichzeitig hohem Gehalt endständiger Doppelbindungen wird hier unter Inkaufnahme eines niedrigen Isobutenumsatzes erzielt, so dass die so gewonnenen Polyisobutene in ihrer Herstellung besonders teuer sind.

Die US 5,286,823 lehrt ein Verfahren zur Polymerisation von Isobuten zu hochreaktivem Polyisobuten in Gegenwart eines Katalysators aus Bortrifluorid und wenigstens einem sekundären Alkohol mit 3 bis 20 Kohlenstoffatomen. In den Beispielen werden Polyisobutene mit zahlenmittleren Molekulargewichten $\overline{M}_N$ im Bereich von 800 bis 2200 Dalton mit einem Gehalt endständiger Doppelbindungen von wenigstens 80 mol% bei Dispersizitäten im Bereich von 1,3 bis 2,0 erhalten. Nach diesem Verfahren gelingt es nicht, gezielt Polyisobutene mit einem bestimmten mittleren Molekulargewicht bei einer gleichzeitig geringen Dispersizität und einem hohen Gehalt endständiger Doppelbindungen herzustellen.

Aus der WO-96/40808 ist ein zweistufiges Verfahren zur Herstellung von hochreaktivem Polyisobuten mit zahlenmittleren Molekulargewichten im Bereich von 500 bis 20 000 Dalton und einem Gehalt an endständigen Doppelbindungen von über 80 mol% bekannt.

Der vorliegenden Erfindung liegt somit die Aufgabe zugrunde, ein einfach zu realisierendes, wirtschaftliches

Verfahren zur Herstellung von hochreaktivem Polyisobuten bereitzustellen, das bei gegebener Zusammensetzung der Reaktionsmischung das Erreichen eines relativen Optimums hinsichtlich des Gehaltes an endständigen Doppelbindungen erlaubt.

Es wurde überraschenderweise gefunden, dass diese Aufgabe durch ein kontinuierliches Polymerisationsverfahren von Isobuten in flüssiger Phase in Gegenwart von Bortrifluorid-Komplex-Katalysatoren gelöst wird, wenn die flüssige Reaktionsphase unter Reaktionsbedingungen, d.h. bei Reaktortemperatur bzw. der Temperatur der Reaktionsphase unter Reaktionsbedingungen eine Viskosität im Bereich von 6 bis 20 $mm^2/s$ (kinematische Viskosität, bestimmt gemäß DIN 51562, Teil 1-4) aufweist.

Demnach betrifft die vorliegende Erfindung ein Verfahren zur kontinuierlichen Herstellung von Polyisobuten mit einem zahlenmittleren Molekulargewicht $\overline{M}_N$ im Bereich von 500 bis 50 000 und einem Gehalt endständiger Doppelbindungen von wenigstens 50 mol% durch ein- oder mehrstufige, kontinuierliche Polymerisation von Isobuten in flüssiger Phase in Gegenwart eines Katalysators aus Bortrifluorid und wenigstens einer sauerstoffhaltigen Verbindung bei Temperaturen unterhalb +40°C, dadurch gekennzeichnet, dass die flüssige Reaktionsphase zumindest in der ersten Polymerisationsstufe eine Viskosität im Bereich von 6 bis 20 $mm^2/s$ (bestimmt nach DIN 51562, Teil 1-4) aufweist.

Im Folgenden versteht man unter flüssiger Reaktionsphase die flüssige Mischung aus Isobuten, Polyisobuten, gegebenenfalls Lösungsmittel und Polymerisationskatalysator, die sich unter Polymerisationsbedingungen im Polymerisationsreaktor befindet. Konzentrationsangaben sind, sofern nichts anderes angegeben ist, auf das Gesamtgewicht der flüssigen Reaktionsphase bezogen.

Die angegebenen Viskositätswerte entsprechen der kinematischen Viskosität der flüssigen Reaktionsphase (flüssige Reaktionsmischung) unter Reaktionsbedingungen. Vorzugsweise wird das erfindungsgemäße Verfahren bei einer Viskosität der flüssigen Reaktionsphase im Bereich von 6 bis 16 $mm^2/s$ und insbesondere im Bereich von 7 bis 12 $mm^2/s$ durchgeführt. Es wird vermutet, dass bei zu niedrigen Viskositätswerten die schlechte Löslichkeit der $BF_3$-Katalysatorkomplexe im Reaktionsmedium zur Ausbildung einer zweiten Flüssigphase führt, wohingegen bei zu hohen Viskositätswerten eine wirksame Wärmeabfuhr aus der flüssigen Reaktionsphase nicht mehr gewährleistet ist. Beide Effekte beeinträchtigen die Polymerqualität, insbesondere hinsichtlich des Gehalts endständiger Doppelbindungen. Vorzugsweise wird das erfindungsgemäße Verfahren bei annähernd konstanter kinematischer Viskosität der flüssigen Reaktionsphase durchgeführt.

Die Viskosität der flüssigen Reaktionsphase hängt von der Reaktionstemperatur, der Konzentration des Polyisobutens in der flüssigen Reaktionsmischung, dem Molekulargewicht des Polyisobutens und dem gewählten Lösungsmittel ab. So steigt die Viskosität der flüssigen Reaktionsphase mit abnehmender Reaktionstemperatur an. Mit steigender Polyisobutenkonzentration in der flüssigen Reaktionsphase steigt auch deren Viskosität. Bei vorgegebener Polyisobutenkonzentration steigt mit zunehmendem Molekulargewicht des Polyisobutens auch die Viskosität der flüssigen Reaktionsphase.

Somit kann der Fachmann bei der Herstellung eines Polyisobutens mit bestimmtem Molekulargewicht die Viskosität der flüssigen Reaktionsphase in einfacher Weise durch Variation der Polymerisationstemperatur, der stätionären Konzentration des Polyisobutens in der flüssigen Reaktionsphase oder durch die Art des Lösungsmittels einstellen.

Das erfindungsgemäße Verfahren wird in der Regel bei einer Polymerisationstemperatur im Bereich von -60°C bis +40°C, vorzugsweise unterhalb 10°C, besonders bevorzugt im Bereich von 0°C bis -40°C, und speziell im Bereich von -5°C bis -30°C durchgeführt. Bei Einsatz von Lösungsmitteln oder Lösungsmittelmischungen mit geringer Viskosität wird man die Reaktionstemperatur eher niedriger, beispielsweise unterhalb -20°C wählen, oder die Polymerkonzentration erhöhen.

Für das erfindungsgemäße Verfahren sind solche Lösungsmittel oder Lösungsmittelgemische geeignet, die unter Reaktionsbedingungen eine Viskosität unterhalb 16 $mm^2/s$ aufweisen und die gegenüber den eingesetzten Reagenzien inert sind. Geeignete Lösungsmittel sind beispielsweise gesättigte Kohlenwasserstoffe, wie n- oder iso-Butan, Pentane, Hexane und Hexanisomere, z.B. n-Hexan, i-Octan, cyclo-Butan oder cyclo-Pentan, halogenierte Kohlenwasserstoffe wie Methylchlorid, Dichlormethan oder Trichlormethan sowie Mi-schungen der vorgenannten Verbindungen. Geeignete Lösungsmittel sind auch weniger reaktive Olefine wie Propen, 1-Buten, cis und trans 2-Buten und Pentengemische. Bevorzugt sind neben n-Hexan technische Hexan-Gemische, Pentangemische oder Olefingemische mit aliphatischen Anteilen, $C_4$-Kohlenwasserstoffgemische, die bereits das zur Polymerisation erforderliche Isobuten enthalten können, z.B. Steamcracker-Raffinate, $C_4$-Schnitte aus der Isobutendehydrierung wie sie z.B. auch in der WO 96/40808 beschrieben sind. Vorzugsweise werden die Lösungsmittel vor ihrem Einsatz im erfindungsgemäßen Verfahren von Verunreinigungen wie Wasser, Carbonsäuren oder Mineralsäuren befreit, beispielsweise durch Adsorption an festen Adsorbentien, wie Aktivkohle, Molekularsieben oder Ionenaustauschern. Geringe Mengen derartiger Verunreinigungen können im erfindungsgemäßen Verfahren jedoch toleriert werden, ohne dass es zu kritischen Selektivitätseinbußen bei der Polymerisation kommt.

Die Konzentration an Polyisobuten in der flüssigen Reaktionsmischung kann im Bereich von 15 bis 70 Gew.-%, vorzugsweise 20 bis 60 Gew.-%, variiert werden, wobei diese Grenzen durch die Viskosität der jeweiligen Polyisobutenlösung vorgegeben sind. Üblicherweise wird man eine möglichst hohe Polyisobutenkonzentration wählen, um Einflüsse durch Verunreinigungen im Lösungsmittel weitgehend auszuschließen und die Kapazität der Anlage, d.h. des Polymerisationsreaktors möglichst hoch zu halten. Da die Viskosität einer Polyisobutenlösung bei vorgegebener Konzentration mit zunehmendem Molekulargewicht des Polyisobutens ansteigt, stellt man bei der Herstellung von Polyisobuten mit einem zahlenmittleren Molekulargewicht $\overline{M}_N$ im Bereich von 500 bis 5000 die Polyisobutenkonzentration vorzugsweise auf einen Wert im Bereich von 40 bis 70 Gew.-%, bezogen auf das Gesamtgewicht der Reaktionsphase, bei der Herstellung von Polyisobuten mit höherem Molekulargewicht entsprechend niedriger ein.

Die Konzentration des Isobutens in der flüssigen Reaktionsphase liegt in der Regel im Bereich von 0,5 bis 50 Gew.-%, vorzugsweise im Bereich von 1 bis 20 Gew.-%, bezogen auf die flüssige Reaktionsphase. Konzentrationsangaben beziehen sich hier und im Folgenden stets auf das Gewicht der flüssigen Reaktionsphase. Hierbei ist zu berücksichtigen, dass das Molekulargewicht des erfindungsgemäß erhaltenen Polyisobutens mit zunehmender Isobutenkonzentration in der flüssigen Reaktionsphase ansteigt. Bei der Herstellung von Polyisobutenen mit zahlenmittleren Molekulargewichten $\overline{M}_N$ im Bereich von 500 bis 5000 arbeitet man vorzugsweise bei einer Isobutenkonzentration im Bereich von 1 bis 20 Gew.-% und insbesondere 1,5 bis 15 Gew.-%, insbesondere 2 bis 10 Gew.-%. Bei der Herstellung von Polyisobutenen mit einem zahlenmittleren Molekulargewicht $\overline{M}_N$ oberhalb 5000 arbeitet man bevorzugt bei einer Isobutenkonzentration im Bereich von 4 bis 50 Gew.-%. Im erfindungsgemäßen Verfahren arbeitet man bevorzugt bei stationären Isobutenkonzentrationen, d.h. die Konzentration des Polyisobutens in der flüssigen Reaktionsphase (d.h. im Reaktor) wird während des erfindungsgemäßen Verfahrens nahezu konstant gehalten.

Die Isobutenkonzentration kann beispielsweise durch Veränderung der Isobutenzufuhr oder durch Anpassung des Zulauf/Umlaufverhältnisses konstant gehalten werden. Vorzugsweise hält man jedoch diese Parameter konstant und reguliert die Isobutenkonzentration durch Manipulation der Polymerisationsgeschwindigkeit. Die Polymerisationsgeschwindigkeit kann durch Reaktionstemperatur, d.h. die Temperatur der flüssigen Phase im Reaktor, durch die Katalysatorkonzentration und die Katalysatoraktivität manipuliert werden, wobei letztere durch Variation des Verhältnisses von Bortrifluorid zu sauerstoffhaltiger Verbindung eingestellt werden kann. Vorzugsweise manipuliert man die Reaktionsgeschwindigkeit (und damit die Isobutenkonzentration) ausschließlich durch die Katalysatoraktivät und hält alle übrigen Parameter nahezu konstant. Hierbei gilt, daß die Katalysatoraktivität bei konstanter Bortrifluorid-Konzentration mit steigender Konzentration an Sauerstoffhaltiger Verbindung abnimmt.

Als Einsatzstoffe für das erfindungsgemäße Verfahren eignen sich sowohl Isobuten selber als auch Isobutenhaltige $C_4$-Kohlenwasserstoffströme, beispielsweise $C_4$-Raffinate, $C_4$-Schnitte aus der Isobuten-Dehydrierung, $C_4$-Schnitte aus Steamcrackern, FCC-Crackern (FCC: Fluid Catalysed Cracking), sofern sie weitgehend von darin enthaltenen 1,3-Butadien befreit sind. Erfindungsgemäß geeignete $C_4$-Kohlenwasserstoffströme enthalten in der Regel weniger als 500 ppm, vorzugsweise weniger als 200 ppm Butadien. Die Anwesenheit von Buten-1, cis- und trans-Buten-2 ist für das erfindungsgemäße Verfahren weitgehend unkritisch und führt nicht zu Selektivitätsverlusten. Typischerweise liegt die Konzentration in den $C_4$-Kohlenwasserstoffströmen im Bereich von 10 bis 60 Gew.-%. Bei Isobutenkonzentrationen <40 Gew.-% wird sie in der Regel durch Mischen mit Reinisobuten auf Werte von mindestens 40 Gew.-% angehoben. Bei Einsatz von $C_4$-Schnitten als Einsatzmaterial übernehmen die von Isobuten verschiedenen Kohlenwasserstoffe die Rolle eines inerten Lösungsmittels. Der Isobuten-Feedstock kann geringe Mengen an Kontaminanten wie Wasser, Carbonsäuren oder Mineralsäuren enthalten, ohne daß es zu kritischen Ausbeute- oder Selektivitätseinbrüchen bei der Polymerisation kommt. Dies bewirkt einen geringeren Alkohol/Etherverbrauch, der die vorgenannten Molverhältnisse zugunsten von $BF_3$ verändert. Es ist aber zweckdienlich und vorteilhaft, eine Anreicherung dieser Verunreinigungen in der Anlage zu vermeiden, indem man solche Schadstoffe beispielsweise durch Adsorption an festen Adsorbentien, wie Aktivkohle, Molekularsiebe oder Ionenaustauscher aus dem isobutenhaltigen Feedstock entfernt.

Im erfindungsgemäßen Verfahren wird die Polymerisation in Gegenwart von Bortrifluorid-Komplexkatalysatoren durchgeführt. Hierunter versteht man Katalysatoren aus Bortrifluorid und wenigstens einer sauerstoffhaltigen Verbindung. Geeignete sauerstoffhaltige Verbindungen sind neben Wasser organische Verbindungen mit bis zu 30 Kohlenstoffatomen, die wenigstens ein an Kohlenstoff gebundenes Sauerstoffatom enthalten. Beispiele hierfür sind $C_1$-$C_{10}$-Alkanole und Cycloalkanole, $C_2$-$C_{10}$-Diole, $C_1$-$C_{20}$-Carbonsäuren, $C_4$-$C_{12}$-Carbonsäureanhydride sowie $C_2$-$C_{20}$-Dialkylether. Hierunter bevorzugt werden einwertige Alkanole mit 1 bis 20 C-Atomen, insbesondere mit 1 bis 4 C-Atomen, die gegebenenfalls zusammen mit den $C_1$-$C_{20}$-Dialkylethern eingesetzt werden können. Erfindungsgemäß bevorzugt werden in Bortrifluorid-Komplex-Katalysatoren Molverhältnisse von Bortrifluorid zu sauerstoffhaltiger Verbindung im Bereich von 1:1 bis 1:2, insbesondere im Bereich von 1:1,1 bis 1:1,9 und speziell im Bereich von 1:1,2 bis 1:1,8. Die $BF_3$-Konzentration im Reaktor wird man in der Regel im Bereich von 0,01 bis 1 Gew.-%, bezogen auf die flüssige Reaktionsphase, insbesondere im Bereich von 0,02 bis 0,5 Gew.-% und speziell im Bereich von 0,03 bis 0,3 Gew.-% variieren.

Im erfindungsgemäßen Verfahren umfasst die sauerstoffhaltige Verbindung im Bortrifluorid-Komplex-Katalysator besonders bevorzugt wenigstens einen einwertigen, sekundären Alkohol A mit 3 bis 20 Kohlenstoffatomen. Beispielhaft für geeignete sekundäre Alkohole seien die folgenden genannt: Isopropanol, 2-Butanol, sowie ferner sek.

-Pentanole, sek.-Hexanole, sek.-Heptanole, sek.-Octanole, sek.-Nonanole, sek.-Decanole oder sek.-Tridecanole. Außer einwertigen, sekundären Alkoholen können auch (poly-)Etherole des Propen- und Butenoxids erfindungsgemäß verwendet werden. Bevorzugt wird 2-Butanol und insbesondere Isopropanol verwendet.

Im erfindungsgemäßen Verfahren hat es sich als besonders vorteilhaft herausgestellt, wenn die sauerstoffhaltige Verbindung neben dem sekundären Alkohol A zusätzlich einen Dialkylether B der allgemeinen Formel $R^1$-O-$R^2$ umfasst, worin die Reste $R^1$ und $R^2$ unabhängig voneinander für einen primären oder sekundären Alkylrest mit 1 bis 10 Kohlenstoffatomen stehen. Vorzugsweise steht wenigstens einer der Reste $R^1$, $R^2$ und insbesondere beide für einen sekundären Alkylrest. Im einzelnen sind beispielsweise für $R^1$ und $R^2$ folgende Reste zu nennen: Isopropyl-, 2-Butyl-, sek.-Pentyl-, Hexyl-, Heptyl- und Octyl-, für $R^2$ zusätzlich Methyl-, Ethyl-, Propyl-, Butyl-, Pentyl- und Hexylreste. Besonders bevorzugte Dialkylether B sind Diisopropylether, Isopropyl-2-butylether und Bis-2-butylether. Günstig ist auch, wenn einer der Reste $R^1$ oder $R^2$ ein tertiärer Alkylrest, z.B. ein tert. Butylrest oder ein 2,4,4-Trimethylpent-2-yl-Rest, ist.

In diesen bevorzugten Bortrifluorid-Komplex-Katalysatoren beträgt das molare Verhältnis von Alkohol A zu Dialkylether B in der Regel 1:100 bis 10:1, vorzugsweise 1:50 bis 2:1 und ganz besonders bevorzugt 1:10 bis 1:1.

Die Bortrifluorid/Ether/sek.-Alkoholkomplexe werden zweckmäßigerweise durch Einleiten von gasförmigem Bortrifluorid in die betreffende sauerstoffhaltige Verbindung oder vorzugsweise in eine Lösung der betreffenden sauerstoffhaltigen Verbindungen in einem Lösungsmittel hergestellt. Die Darstellung dieser Komplexe erfolgt in der Regel bei Temperaturen von -60 bis +40°C, vorzugsweise bei -20 bis +40°C. Geeignete Lösungsmittel sind beispielsweise Kohlenwasserstoffe, wie Pentan, Hexan, Isooctan oder halogenierte Kohlenwasserstoffe, wie Methylenchlorid oder Chloroform.

Die Bortrifluorid-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden. Dabei kann die Aktivität des Katalysators durch Zugabe weiterer sauerstoffhaltiger Verbindungen eingestellt werden.

Eine andere, bevorzugte Variante besteht darin, daß man die Bortrifluorid-Komplexe in situ in der Polymerisationsapparatur erzeugt. Bei dieser Verfahrensweise wird die betreffende Sauersoffhaltige Verbindung gegebenenfalls gemeinsam mit einem Lösungsmittel in die Polymerisationsapparatur eingespeist und Bortrifluorid in der erforderlichen Menge in dieser Mischung der Reaktanten dispergiert. Hierbei setzt sich das Bortrifluorid und die sauerstoffhaltige Verbindung zum Bortrifluorid-Komplex um. Anstelle eines zusätzlichen Lösungsmittels kann bei der in situ-Erzeugung des Bortrifluorid-Katalysator-Komplexes Isobuten oder die Reaktionsmischung aus nicht umgesetztem Isobuten und Polyisobuten als Lösungsmittel fungieren. Dient die Reaktionsmischung aus Polyisobuten-haltigem Isobuten als Lösungsmittel, wird selbstverständlich das Isobuten in der Regel nicht vollständig umgesetzt und zweckmäßigerweise ein Isobuten-Teilumsatz von max. 80 % vorzugsweise max. 70 % eingestellt.

In einer bevorzugten Ausführungsform wird zunächst ein Komplex aus Dialkylether B und $BF_3$ getrennt oder im Lösemittelzulauf, der in diesem Fall kein Isobuten enthält, zum Reaktor hergestellt und erst dann im Komplexzulauf oder Lösemittelzulauf zum Reaktor oder erst im Reaktor mit dem sekundären Alkohol A zusammengebracht. Dadurch kann die Energie der Komplexbildung ohne schädliche Nebenproduktbildung bei der Erzeugung des Alkoholkomplexes abgeführt werden. Außerdem ermöglicht diese Vorgehensweise eine simple Manipulation der Katalysatoraktivität über das Verhältnis von Bortrifluorid zu Alkohol.

Als Rohstoff zur Herstellung der Bortrifluorid-Komplexe wird zweckmäßigerweise gasförmiges Bortrifluorid benutzt, wobei technisches, noch geringe Mengen Schwefeldioxid und $SiF_4$ enthaltenes (Reinheit: 96,5 Gew.-%), vorzugsweise aber hochreines Bortrifluorid (Reinheit: 99,5 Gew.-%) verwendet werden kann.

Zur erfindungsgemäßen Herstellung hochreaktiver Polyisobutene wird also die vorgebildete Bortrifluorid-Komplexlösung, Emulsion oder Suspension entsprechend dem Katalysatorbedarf im Isobuten verteilt oder alternativ der Katalysator im sek.-Alkohol-Etherhaltigen Isobutenstrom durch Einleiten von gasförmigem Bortrifluorid in situ erzeugt.

Die Polymerisation des Isobutens wird erfindungsgemäß kontinuierlich durchgeführt. Zu diesem Zweck arbeitet man in an sich herkömmlichen Reaktoren, wie Rohrreaktoren, Rohrbündelreaktoren oder Rührkesseln. Bevorzugt wird das erfindungsgemäße Verfahren in einem Schlaufenreaktor, also einem Rohr- oder Rohrbündelreaktor mit stetigem Umlauf des Reaktionsgutes, durchgeführt. In der Regel wird man das Verhältnis von Zulauf zu Umlauf zwischen 1:1 und 1:1000, vorzugsweise im Bereich von 1:5 bis 1:500, insbesondere im Bereich von 1:20 und 1:200 v/v variieren. Es versteht sich von selbst, daß die Zulaufmenge nach Äquilibrierung der Polymerisationsreaktion gleich der Menge des Reaktionsaustrages ist.

Zur Vermeidung hoher lokaler und stationärer Katalysatorkonzentrationen in der Polymerisationsapparatur, die Anlaß zu Doppelbindungsverschiebungen geben können, ist es zweckmäßig, sowohl bei der Einleitung vorgeformter Katalysatorkomplexe in den Reaktor, als auch bei der in situ-Darstellung der Bortrifluorid-Komplexe im Reaktor für eine gute Durchmischung aller Reaktionspartner schon bei der Einleitung in den Reaktor zu sorgen. Des weiteren ist es zweckdienlich, eine turbulente Strömung des Reaktionsgutes im Reaktor zu erzeugen, wozu der Reaktor beispielsweise mit geeigneten Einbauten, wie Umlenkblechen, versehen oder die Rohrquerschnitte so dimensioniert werden können, daß sich eine geeignete Strömungsgeschwindigkeit einstellt. Bei Rohr- oder Rohrbündelreaktoren liegt das Verhältnis von Rohrlänge zu Rohrquerschnitt im Bereich von 50 bis 5000, insbesondere 100 bis 2000.

Die Verweilzeit des zu polymerisierenden Isobutens im Reaktor kann 5 sec. bis mehrere Stunden betragen, vorzugsweise wird eine Verweilzeit von 1 bis 30 und besonders bevorzugt, von 2 bis 20 Minuten gewählt. Die Bruttoreaktionsgeschwindigkeit ist von der Menge, vor allem aber dem Molverhältnis des eingesetzten Komplexes abhängig. Über dieses Verhältnis ist nahezu jede Bruttoreaktionsgeschwindigkeit einstellbar. Die optimale Reaktionsgeschwindigkeit ist apparativ bedingt und richtet sich nach der Wärmeabfuhr. Kurze Reaktionszeiten sind bevorzugt.

Da die Polymerisationsreaktion exotherm verläuft, wird die Polymerisationswärme in der Regel mit Hilfe einer Kühlvorrichtung, die beispielsweise mit flüssigem Ammoniak als Kühlmittel betrieben werden kann, abgeführt. Eine andere Möglichkeit die Polymerisationswärme abzuleiten, ist die Siedekühlung. Dabei wird die freiwerdende Wärme durch die Verdampfung des Isobutens und/oder anderer leicht flüchtiger Bestandteile des Isobuten-Feedstocks oder des gegebenenfalls leichtflüchtigen Lösungsmittels wie Ethan, Propan oder Butan abgeführt, wodurch die Temperatur konstant bleibt.

Der Isobutenumsatz kann prinzipiell beliebig eingestellt werden. Es versteht sich aber von selbst, daß bei sehr niedrigen Isobutenumsätzen die Wirtschaftlichkeit des Verfahrens in Frage gestellt ist, wohingegen bei sehr hohen Isobutenumsätzen von mehr als 99% die Gefahr von Doppelbindungsverschiebungen, ein Einbau von Oligomeren oder von n-Buten, wenn dieses im Feed enthalten ist, immer größer wird und kürzere Reaktionszeiten, d.h. verbesserte Wärmeabfuhr zwingend erforderlich werden. Üblicherweise beträgt der Isobutenumsatz aus diesen Gründen zwischen 20 und 99%, besonders bevorzugt sind Isobutenumsätze zwischen 90 und 98%. Überraschenderweise finden bei diesen hohen Isobutenumsätzen unter Verwendung des erfindungsgemäßen Katalysatorsystems Doppelbindungsverschiebungen nur in geringem Umfang statt und das dabei erhältliche Polymerisat hat immer noch einen Anteil von mehr als 80 mol% endständigen Vinylidengruppen. Zur Erzeugung von Polyisobuten mit mehr als 90 mol% endständigen Doppelbindungen wird bevorzugt (bei einem Feed mit einer Isobutenkonzentration von wenigstens 50 Gew.-%) ein Isobutenumsatz von bis zu 99%, vorzugsweise ein Isobutenumsatz zwischen 90 und 99% und insbesondere zwischen 94 und 99% eingestellt.

Das erfindungsgemäße Verfahren kann ein- oder mehrstufig durchgeführt werden, wobei die einstufige Fahrweise bevorzugt ist. Dabei gelten die vorstehend beschriebenen Reaktionsbedingungen zunächst für die erste Reaktionsstufe, bei der in der Regel das Isobuten bis zu einem Teilumsatz von 95% polymerisiert wird, wenn weitere Polymerisationsstufen vorgesehen sind. Die Ausgestaltung der zweiten und weiteren Polymerisationsstufen erfolgt dann, wie in der WO 96/40808 beschriebenen weise.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Ether, Alkohole, Nitrile wie Acetonitril, Ammoniak oder wäßrige Lösungen von Mineralbasen, wie Alkalimetall- und Erdalkalimetall-Hydroxidlösungen, Lösungen von Carbonaten dieser Metalle u.ä. verwendet werden.

Im weiteren Gang der Aufarbeitung wird das Polyisobuten, zweckmäßigerweise nach einer oder mehreren Extraktionen zur Entfernung von Restmengen an Komplex - üblicherweise Methanol- oder Wasserwäschen - destillativ in nicht umgesetztes Isobuten, Lösungsmittel, Oligomere und Polyisobuten getrennt. Das Isobuten, das Lösungsmittel und die Oligomeren können in die Polymerisationsapparatur zurückgeführt werden. Das gewünschte Polyisobuten fällt als Sumpfprodukt an.

Das vorliegende Verfahren erlaubt in einfacher Weise die gezielte Herstellung von Polyisobutenen mit einem bestimmten Molekulargewicht, wobei das jeweils erhältliche Polyisobuten sowohl eine enge Molekulargewichtsverteilung, charakterisiert durch ein $M_W/M_N \leq 1{,}8$, z.B. bei einem $\overline{M}_N$ von 1000 Dalton, und einen Gehalt an endständigen Doppelbindungen (Vinyliden Gruppierungen) von wenigstens 50 mol%, insbesondere wenigstens 80 mol% und speziell wenigstens 90 mol% auch bei hohen Isobutenumsätzen erlaubt.

Ein weiterer Vorteil des erfindungsgemäßen Verfahrens ist seine einfache Steuerung. So kann sowohl die Temperatur $T_R$ der flüssigen Reaktionsphase als auch ihre Viskosität $\eta_R$ und die Isobutenkonzentration $c_I$ in der flüssigen Reaktionsphase durch die Aktivität des Katalysators und damit durch die Zugabe an sauerstoffhaltiger Verbindung manipuliert werden. Steigt also die Temperatur $T_R$ an als Folge einer erhöhten Polymerisationsgeschwindigkeit, kann diese Abweichung durch verstärkte Zugabe sauerstoffhaltiger Verbindung korrigiert werden. Sinkt die Viskosität $\eta_R$ wegen einer abnehmenden Polyisobutenkonzentration bzw. einer Zunahme der Isobutenkonzentration in der flüssigen Reaktionsphase ab, so kann dieser Effekt durch Verringerung des Verhältnisses von $BF_3$ zu sauerstoffhaltiger Verbindung, bei konstanter $BF_3$-Konzentration durch Verlangsamung der Zugabe der sauerstoffhaltigen Verbindung ausgeglichen werden. Die Bestimmung der Temperatur $T_R$, der Viskosität $\eta_R$ (indirekt über die Pumpleistung der Umwälzpumpe oder den Druckverlust im Reaktor, wenn es sich um einen Rohr- oder Rohrbündelreaktor handelt) und der Isobutenkonzentration $c_I$ (beispielsweise durch IR- oder NIR-Spektroskopie) ist "on-line" möglich und erlaubt damit eine Kopplung mit dem Verhältnis $BF_3$ zu der sauerstoffhaltigen Verbindung, z.B. über die Zugabegeschwindigkeit von $BF_3$ und/oder der sauerstoffhaltigen Verbindung. Besonders einfach gestaltet sich das erfindungsgemäße Verfahren,

wenn man die $BF_3$-Konzentration und die Temperatur $T_R$ konstant hält, letztere z.B. durch Thermostatisierung oder Siedekühlung und Veränderungen der Viskosität $\Delta\eta_R$ bzw. der Isobutenkonzentration $\Delta c_I$ durch Veränderung der Zugabegeschwindigkeit der sauerstoffhaltigen Verbindung ausgleicht. Zu diesem Zweck kann man beispielsweise die "on-line" ermittelten Größen $\eta_R$ (über die Pumpleistung oder den Druckverlust im Reaktor) oder $c_I$ (z.B. durch IR- oder NIR-Spektroskopie) mit der Zugabegeschwindigkeit der sauerstoffhaltigen Verbindung koppeln. Die Zugabegeschwindigkeit kann beispielsweise durch regulierbare Ventile oder regulierbare Pumpen gesteuert werden. Maßnahmen hierzu sind dem Fachmann bekannt.

Beispiele

Analytik:

1. Unter endständigen Vinylidengruppierungen oder endständigen Doppelbindungen werden im Sinne der vorliegenden Anmeldung solche Doppelbindungen verstanden, deren Lage im Polyisobutenmakromolekül, durch die allgemeine Formel II

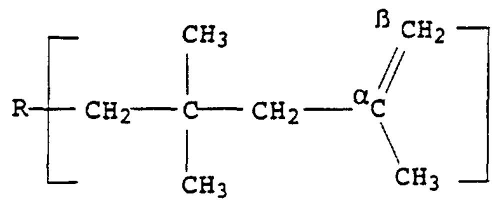

II

beschrieben wird, in der R für einen Polyisobutylenrest steht. Die Art und der Anteil der im erfindungsgemäß hergestellten Polyisobuten vorhandenen Doppelbindungen wird mit Hilfe der Methode der $^{13}C$-NMR-Spektroskopie bestimmt, wobei die beiden in Formel IIa mit $\alpha$ und $\beta$ markierten Kohlenstoffatome der endständigen Doppelbindung im $^{13}C$-NMR-Spektrum durch ihre Signale bei der chemischen Verschiebung von 143,6 bzw. 114,4 ppm identifizierbar sind und der molare Anteil der endständigen Doppelbindungen bezüglich anderer Arten von Doppelbindungen über die Ermittlung der Peakflächen der Signale in Relation zum Gesamtintegral der Olefinsignale errechnet wird.

2. Die mittleren Molmassen ($\bar{M}_N$) der gemäß den Beispielen hergestellten Polymere wurden mittels Gelpermeationschromatographie (GPC) bestimmt, wobei standardisierte Polyisobutene zur Eichung verwendet wurden. Aus den erhaltenen Chromatogrammen wurde das Zahlenmittel $\bar{M}_N$ nach der Gleichung

$$\bar{M}_N = \frac{\Sigma c_i}{\Sigma \frac{c_i}{M_i}}$$

berechnet, in der ci für die Konzentration der einzelnen Polymerspecies i im erhaltenen Polymergemisch steht und in der Mi das Molekulargewicht der einzelnen Polymerspecies i bedeutet. Die Molekulargewichtsverteilung, im folgenden als Dispersizität D bezeichnet, wurde aus dem Verhältnis von Gewichtsmittel des Molekulargewichts ($\bar{M}_W$) und Zahlenmittel des Molekulargewichts ($\bar{M}_N$) nach der Gleichung

$$\frac{\bar{M}_W}{\bar{M}_N} = D$$

errechnet. Das Gewichtsmittel $\bar{M}_W$ wurde aus den erhaltenen Chromatogrammen mit Hilfe der Formel

$$\bar{M}_W = \frac{\Sigma c_i M_i}{\Sigma c_i}$$

bestimmt.

Die Bestimmung der Viskosität erfolgte nach DIN 51562, Blatt 1 bis 4 bei der jeweiligen Reaktorinnentemperatur.

Beispiel 1: Herstellung von Polyisobuten mit einem Molekulargewicht $\overline{M}_N$ von 910

Der Polymerisationsreaktor besteht aus einem Teflonschlauch mit einem Innendurchmesser von 6 mm und einer Länge von 7,6 mm sowie einer Zahnradpumpe, die einen Reaktorinhalt mit einer Fließgeschwindigkeit von 50 1/h im Kreis führt. Schlauch und Pumpe haben ein Leervolumen von 200 ml. Schlauch und Pumpenkopf befinden sich in einem Kältebad, das auf -15,5°C mittels eines Kryostaten gekühlt wird. Zusätzlich weist der Reaktor noch Einlässe für Lösungsmittel und Isobuten und einen etwa 2 cm stromaufwärts vom Einlaß angeordneten Auslaß für das Reaktionsprodukt auf.

Die Einsatzstoffe Hexan und Isobuten werden über Molekularsieb 3 Å auf <3 ppm Wasser getrocknet und über eine 2 mm Kapillare, die auf -15,5°C gekühlt wird, dem Reaktor zugeführt. Mit dem Hexan wird Isopropanol, Diisopropylether (als Lösung von 2 m Isopropanol und 2 m Diisopropylether in Hexan) und Bortrifluorid zugeführt.

Dem Reaktor wurden 300 g/h Isobuten und 300 g/h Hexan zugeführt. Die Zufuhr von Bortrifluorid über den Hexanzulauf wurde auf 12,2 mmol/h eingestellt. Über den Hexanzulauf wurde die Zugaberate der Komplexbildner-Lösung solange variiert, bis eine stationäre Isobutenkonzentration erreicht war. Die Reaktionstemperatur betrug -10°C. Der Zulauf an Diisopropylether und Isopropanol betrug je 10 mmol/h. Die Viskosität der im Reaktor befindlichen flüssigen Phase betrug 6,80 $mm^2$/sec (bestimmt bei -10°C nach DIN 51562, Blatt 1 bis 4). Der Austrag wurde einer Wäsche mit Wasser unterworfen und anschließend im Vakuum (2 mbar) bei 230°C entgast. Das so erhaltene Polyisobuten hatte ein Molekulargewicht $\overline{M}_N$ von 910 Dalton, eine Dispersizität $\overline{M}_W/\overline{M}_N$ von etwa 1,65 und einen Gehalt an endständigen Doppelbindungen von 94,2 mol%.

Vergleichsbeispiel 1:

In der in Beispiel 1 beschriebenen Apparatur wurde gemäß der dort beschriebenen Vorgehensweise 200 g/h Isobuten und 400 g Hexan zugeführt. Die stationäre Isobutenkonzentration lag bei 2,0 Gew.-% bei einer Reaktorinnentemperatur von -10°C und einer Badtemperatur von -13,5°C. Der $BF_3$-Zulauf betrug 12,2 mmol/h. Unter diesen Bedingungen lag der Zulauf an Diisopropylether und Isopropanol jeweils bei 9,6 mmol/h. Die Viskosität der im Reaktor befindlichen flüssigen Phase lag bei 2,37 $mm^2$/sec (bestimmt bei -10°C). Das nach Aufarbeitung erhaltene Polyisobuten hatte ein $\overline{M}_N$ von 820 Dalton, die Dispersizität lag bei 1,69. Der Gehalt an endständigen Doppelbindungen lag lediglich bei 88,3 mol%.

## Patentansprüche

1. Verfahren zur kontinuierlichen Herstellung von Polyisobuten mit einem zahlenmittleren Molekulargewicht $\overline{M}_N$ im Bereich von 500 bis 50 000 und einem Gehalt endständiger Doppelbindungen von wenigstens 50 mol% durch einstufige oder mehrstufige kontinuierliche Polymerisation von Isobuten in flüssiger Phase in Gegenwart eines Katalysators aus Bortrifluorid und wenigstens einer sauerstoffhaltigen Verbindung bei Temperaturen unterhalb +40°C, **dadurch gekennzeichnet, dass** die flüssige Reaktionsphase zumindest in der ersten Polymerisationsstufe eine Viskosität im Bereich von 6 bis 20 $mm^2$/s (bestimmt nach DIN 51562) aufweist.

2. Verfahren nach Anspruch 1, **dadurch gekennzeichnet, dass** man die Polymerisation bei einer stationären Isobutenkonzentration im Bereich von 1 bis 20 Gew.-% durchführt.

3. Verfahren nach einem der vorhergehenden Ansprüche, **dadurch gekennzeichnet, dass** man die Polymerisation bei konstanter Viskosität durchführt.

4. Verfahren nach einem der vorhergehenden Ansprüche, **dadurch gekennzeichnet, dass** die Konzentration des Katalysators in der flüssigen Reaktionsphase, berechnet als Bortrifluorid, im Bereich von 0,01 bis 1 Gew.-% liegt.

5. Verfahren nach einem der vorhergehenden Ansprüche, **dadurch gekennzeichnet, dass** das Molverhältnis von Bortrifluorid zu sauerstoffhaltiger Verbindung im Bereich von 1:1 bis 1:2 liegt.

6. Verfahren nach einem der vorhergehenden Ansprüche, **dadurch gekennzeichnet, dass** die sauerstoffhaltige Verbindung wenigstens einen sekundären Alkohol A mit 3 bis 20 C-Atomen umfasst.

**7.** Verfahren nach Anspruch 6, **dadurch gekennzeichnet, dass** die sauerstoffhaltige Verbindung zusätzlich wenigstens einen Dialkylether B der Formel $R^1$-O-$R^2$ umfasst, worin $R^1$ und $R^2$ unabhängig voneinander für primäre oder sekundäre Alkylreste mit 1 bis 10 C-Atomen stehen.

**8.** Verfahren nach einem der vorhergehenden Ansprüche, **dadurch gekennzeichnet, dass** man die Polymerisation einstufig durchführt.

**9.** Verfahren nach einem der vorhergehenden Ansprüche, **dadurch gekennzeichnet, dass** man die Polymerisation als ein Umlauf-Verfahren mit einem Zulauf-/Umlauf-Verhältnis im Bereich von 1:5 bis 1:500 durchführt.

**10.** Verfahren nach einem der vorhergehenden Ansprüche, **dadurch gekennzeichnet, dass** man wenigstens einen der Reaktionsparameter, ausgewählt unter der Temperatur $T_R$ der flüssigen Reaktionsphase, der Viskosität $\eta_R$ der flüssigen Reaktionsphase oder der Isobutenkonzentration $c_I$ der flüssigen Reaktionsphase durch Zugabe der sauerstoffhaltigen Verbindung manipuliert.

## Claims

**1.** A process for the continuous preparation of polyisobutene having a number-average molecular weight $\overline{M}_N$ of from 500 to 50,000 and containing at least 50 mol% of terminal double bonds by one-stage or multistage, continuous polymerization of isobutene in the liquid phase in the presence of a catalyst comprising boron trifluoride and at least one oxygen-containing compound at below +40°C, wherein the liquid reaction phase has a viscosity of from 6 to 20 $mm^2/s$ (determined according to DIN 51562), at least in the first polymerization stage.

**2.** A process as claimed in claim 1, wherein the polymerization is carried out at a steady-state isobutene concentration of from 1 to 20% by weight.

**3.** A process as claimed in any of the preceding claims, wherein the polymerization is carried out at constant viscosity.

**4.** A process as claimed in any of the preceding claims, wherein the concentration of the catalyst in the liquid reaction phase, calculated as boron trifluoride, is from 0.01 to 1% by weight.

**5.** A process as claimed in any of the preceding claims, wherein the molar ratio of boron trifluoride to oxygen-containing compound is from 1:1 to 1:2.

**6.** A process as claimed in any of the preceding claims, wherein the oxygen-containing compound comprises at least one secondary alcohol A of 3 to 20 carbon atoms.

**7.** A process as claimed in claim 6, wherein the oxygen-containing compound additionally comprises at least one dialkyl ether B of the formula $R^1$-O-$R^2$, where $R^1$ and $R^2$, independently of one another, are primary or secondary alkyl radicals of 1 to 10 carbon atoms.

**8.** A process as claimed in any of the preceding claims, wherein the polymerization is carried out in one stage.

**9.** A process as claimed in any of the preceding claims, wherein the polymerization is carried out as a circulation process with a feed/circulation ratio of from 1:5 to 1:500.

**10.** A process as claimed in any of the preceding claims, wherein at least one of the reaction parameters, selected from the temperature $T_R$ of the liquid reaction phase, the viscosity $h_R$ of the liquid reaction phase and the isobutene concentration $c_I$ of the liquid reaction phase, is manipulated by the addition of the oxygen-containing compound.

## Revendications

**1.** Procédé de préparation en continu de polyisobutène, ayant une masse moléculaire moyenne en nombre $M_n$ allant de 500 à 50 000 et une teneur en doubles liaisons terminales au moins de 50% en moles, au moyen d'une polymérisation d'isobutène en phase liquide en continu en une ou plusieurs étapes, en présence d'un catalyseur de trifluorure de bore et d'au moins un composé contenant de l'oxygène, à des températures inférieures à +40°C, **caractérisé en ce que** la phase réactionnelle liquide présente, au moins dans la première étape de polymérisation, une viscosité allant de 6 $mm^2/s$ à 20 $mm^2/s$ (déterminée selon DIN 51562).

2. Procédé selon la revendication 1, **caractérisé en ce que** l'on réalise la polymérisation à une concentration en isobutène fixe allant de 1% à 20% en poids.

3. Procédé selon l'une quelconque des revendications précédentes, **caractérisé en ce que** l'on réalise la polymérisation à une viscosité constante.

4. Procédé selon l'une quelconque des revendications précédentes, **caractérisé en ce que** la concentration en catalyseur dans la phase réactionnelle liquide, exprimée en trifluorure de bore, va de 0,01% à 1% en poids.

5. Procédé selon l'une quelconque des revendications précédentes, **caractérisé en ce que** le rapport molaire du trifluorure de bore au composé contenant de l'oxygène va de 1:1 à 1:2.

6. Procédé selon l'une quelconque des revendications précédentes, **caractérisé en ce que** le composé contenant de l'oxygène comprend au moins un alcool secondaire A possédant 3 à 20 atomes de carbone.

7. Procédé selon la revendication 6, **caractérisé en ce que** le composé contenant de l'oxygène comprend en plus au moins un éther dialkylique B de formule $R^1$-O-$R^2$, dans laquelle $R^1$ et $R^2$ représentent, indépendamment l'un de l'autre, des groupes alkyles primaires ou secondaires possédant 1 à 10 atomes de C.

8. Procédé selon l'une quelconque des revendications précédentes, **caractérisé en ce que** l'on réalise la polymérisation en une étape.

9. Procédé selon l'une quelconque des revendications précédentes, **caractérisé en ce que** l'on réalise la polymérisation sous forme d'un procédé cyclique avec un rapport alimentation/circulation allant de 1:5 à 1:500.

10. Procédé selon l'une quelconque des revendications précédentes, **caractérisé en ce que** l'on règle au moins un des paramètres de réaction, choisi parmi la température $T_R$ de la phase réactionnelle liquide, la viscosité $\eta_R$ de la phase réactionnelle liquide ou la concentration en isobutène $C_I$ de la phase réactionnelle liquide, en ajoutant le composé contenant de l'oxygène.